**Europäisches Patentamt**

**European Patent Office**

**Office européen des brevets**

(19)

(11) Veröffentlichungsnummer : **0 443 185 B1**

# (12) EUROPÄISCHE PATENTSCHRIFT

(45) Veröffentlichungstag der Patentschrift :
**01.02.95 Patentblatt 95/05**

(21) Anmeldenummer : **90125132.2**

(22) Anmeldetag : **21.12.90**

(51) Int. Cl.⁶ : **G01S 13/93**

(54) Verfahren und Vorrichtung zur Unterstützung eines Kraftfahrers bei einem Fahrspurwechsel.

(30) Priorität : **21.02.90 DE 4005444**

(43) Veröffentlichungstag der Anmeldung :
**28.08.91 Patentblatt 91/35**

(45) Bekanntmachung des Hinweises auf die
Patenterteilung :
**01.02.95 Patentblatt 95/05**

(84) Benannte Vertragsstaaten :
**DE ES FR GB IT SE**

(56) Entgegenhaltungen :
**EP-A- 0 210 079**
**EP-A- 0 381 016**
**GB-A- 2 004 158**
**US-A- 3 697 985**

(73) Patentinhaber : **Bayerische Motoren Werke
Aktiengesellschaft
Patentabteilung AJ-3
D-80788 München (DE)**

(72) Erfinder : **Schindler, Volker, Dr.
Max-Halbe-Strasse 14
W-8044 Unterschleissheim (DE)**

EP 0 443 185 B1

## Beschreibung

Die Erfindung bezieht sich auf ein Verfahren und eine Vorrichtung zum Messen und Auswerten des Abstands eines Kraftfahrzeugs zu einem nachfolgenden Kraftfahrzeug, bei welchem die Messung und Auswertung in dem vorderen Kraftfahrzeug durchgeführt werden, und auf eine Vorrichtung in einem Kraftfahrzeug zur Durchführung des Verfahrens nach dem Oberbegriff des Patentanspruchs 1 und dem Oberbegriff des Patentanspruchs 6.

Ein System, das eine derartige Vorrichtung enthält und das nach einem derartigen Verfahren arbeitet, ist beispeilsweise aus der GB 2 004 158 A bekannt. Bei diesem bekannten System wird unter Ausnutzung des Doppler-Effekts in einem geparkten Fahrzeug festgestellt, ob sich ein Fahrzeug von hinten an das geparkte Fahrzeug annähert, um in diesem Fall ein Warnsignal beim Öffnen der Tür abzugeben. Die Logik zur Ermittlung des Abstandes im Entfernungsmeßgerät durch Ermittlung der Doppler-Frequenz ist bei diesem bekannten System nur für ein stehendes und ein fahrendes Kraftfahrzeug vorgesehen. Die Logik zur Abtandsermittlung nach dem bekannten System ist nicht auf zwei hintereinander fahrende Kraftfahrzeuge anwendbar. Somit kann der Abstand eines nachfolgenden Fahrzeugs ausgehend von einem bewegten Fahrzeug nach dem Stand der Technik nicht ermittelt werden. Darüber hinaus wird bei dem aus der GB 2 004 158 A bekannten System lediglich ein einziges Warnsignal ausgegeben, wenn ein an das geparkte Fahrzeug herannahendes Fahrzeug einen vorgegebenen Abstandswert unterschreitet. Somit erhält der Fahrer keine bewertete Information, z.B. darüber, mit welcher Geschwindigkeit sich dieses herannahende Fahrzeug bewegt.

Es ist hinreichend bekannt, daß beim Führen eines Kraftfahrzeugs der vordere Bereich gut übersehen und - zumindest bei guter Sicht - Entfernungen und Geschwindigkeiten hinreichend zuverlässig eingeschätzt werden können. Beim hinteren Bereich besteht jedoch das Problem, daß der rückwärtige Verkehr nur über Spiegel bzw. durch Wenden des Kopfes und nur für kurze Zeit erfaßt werden kann. Das Schätzen von Entfernungen und mehr noch von Geschwindigkeiten ist dabei selbst bei guter Sicht sehr fehlerbehaftet.

Bei schlechter Sicht - Nacht, Nebel, Blendung, Regen, Gischt - kann der Fahrer Entfernungen und Geschwindigkeiten noch schlechter beurteilen, da ihm kaum noch Bezugspunkte in der Umgebung zur Verfügung stehen (Abstandsschätzung aus dem scheinbaren Abstand von Lichtpunkten). Dieser Effekt wird durch die ohnehin verminderte Wahrnehmungsfähigkeit bei Nacht und die extremen Leuchtdichteunterschiede noch verstärkt.

Ein Verfahren der eingangs erwähnten Art ist beispielsweise aus der DE-A-2143406 bekannt. Dort ist ein Doppler-Radar-Gerät beschrieben, mittels dem ein Bereich unmittelbar neben und hinter dem Fahrzeug daraufhin überwacht wird, ob sich dort ein Fahrzeug befindet. Das Gerät ist somit geeignet, die Nachteile des toten Winkels eines Rückspiegels zu umgehen.

Bei einem Fahrspurwechsel ist darüberhinaus von erheblicher Bedeutung, wie sich der nachfolgende Verkehr im ferneren Bereich verhält. Ohne direkten Bezug auf den Spurwechsel eines Kraftfahrzeugs zu nehmen, ist es aus der DE-A-1929587 allgemein bekannt, Kollisionen zu vermeiden, indem die beteiligten Fahrzeuge mit einem Sende- und Empfangssystem ausgerüstet sind. Nach dem sogenannten Transponder-Prinzip antwortet Fahrzeug B auf einen Laser-Impuls von Fahrzeug A. Das System kann daher nicht autonom arbeiten und ist relativ aufwendig.

Durch die Erfindung wird die Aufgabe gelöst, ein Verfahren und eine Vorrichtung der eingangs genannten Art so auszubilden, daß dem Kraftfahrer eine Information zur Verfügung steht, die ihm beim Fahrspurwechsel hilft, die Verkehrssituation im entfernteren rückwärtigen Bereich zuverlässig zu beurteilen, um ihn bei seiner Entscheidungsfindung bezüglich eines Fahrspurwechsels seines Kraftfahrzeugs zu unterstützen.

Diese Aufgabe wird bezüglich des Verfahrens dadurch gelöst, daß aus mehreren in vorbestimmtem Zeitabstand aufeinander folgenden Abstandsmeßwerten diejenige Differenzbeschleunigung beider Kraftfahrzeuge ermittelt wird, die zur Einhaltung des notwendigen Sicherheitsabstandes zwischen beiden Fahrzeugen erforderlich wäre, und unter Berücksichtigung der ermittelten Differenzbeschleunigung beider Kraftfahrzeuge ein Bewertungsindex gebildet wird, der dem Kraftfahrer optisch und/oder akustisch angezeigt wird.

Der Erfindung liegt dabei die Erkenntnis zugrunde, daß nicht allein die Momentanwerte von Geschwindigkeit und Abstand des nachfolgenden Fahrzeugs relevant sind, sondern daß auch das aktuelle Verhalten des nachfolgenden Verkehrs, also ob abgebremst oder weiter beschleunigt wird, in Betracht zu ziehen ist.

Kombiniert man das Verhalten des nachfolgenden Verkehrs mit dem eigenen Beschleunigungsverhalten, so läßt sich der Bewertungsindex bilden. Bei der einfachsten Gestaltung des Bewertungsindex ist vorgesehen, den Wert der errechneten, für das sichere Wechseln notwendigen Differenzbeschleunigung analog dem Fahrer anzuzeigen. Die Bewertung im Hinblick auf die Gefährlichkeit des Spurwechselvorgangs verbleibt allein beim Fahrer. Der Bewertungsindex gibt dann darüber Auskunft, ob ein Spurwechsel überhaupt gefahrlos möglich ist, und wenn ja, welche Beschleunigung des eigenen Fahrzeugs nötig ist.

Bei einer verfeinerten Ausführungsform ist vorgesehen, die theoretisch möglichen Werte des Bewertungs-

2

index in Teilbereiche zu gliedern, die jeweils einer Spurwechselempfehlung entsprechen.

So z.B. bewertet die Spurwechselhilfe die gemessenen Daten:
- der Messung zugängliches Sichtfeld (Abschattungen, Kurven)
- Abstand zu anderen Fahrzeugen und der Winkel unter denen diese erscheinen
- Geschwindigkeit anderer Fahrzeuge
- eigenen Geschwindigkeit

in fünf Stufen nach ihrer Gefährlichkeit in Bezug auf einen Spurwechsel. Die Signalisierung erfolgt beispielsweise über eine Farbanzeige in Ampelform.

Die Zeichenkombinationen haben folgende Bedeutung:

1 (grün):
Spurwechsel ohne Gefahr möglich, d. h. es werden keine nachfolgenden Fahrzeuge erfaßt oder sie fahren mit konstantem, sicheren Abstand.

2 (grün/gelb):
Spurwechsel bei zügiger Beschleunigung möglich, erforderliche Differenzbeschleunigung:
$$\text{Delta a} < 1\ m/s^2$$

3 (gelb):
Spurwechsel möglich, wenn dem nachfolgenden Fahrzeug eine mäßige Abbremsung (vom-Gas-gehen) zugemutet werden kann und gleichzeitig zügig beschleunigt wird:
$$1\ m/s^2 \leqq \text{Delta a} < 2\ m/s^2$$

4 (gelb/rot):
Ein Spurwechsel erfordert auch bei zügiger Beschleunigung ein starkes Abbremsen des nachfolgenden Verkehrs:
$$2\ m/s^2 \leqq \text{Delta a} < 4\ m/s^2$$

5 (rot):
Ein sicherer Spurwechsel erfordert eine Differenzbeschleunigung:
$$\text{Delta a} \geqq 4\ m/s^2$$

Bei der roten Stufe kann ein akustisches Warnsignal ausgelöst werden, wenn ein ermittelter Lenkeinschlag auf eine irrtümliche Nichtbefolgung der negativen Aussage der Spurwechselhilfe schließen läßt, die eine Kollision zur Folge hätte.

Es ist sinnvoll, die Delta a-Grenzwerte als Funktion der eigenen Geschwindigkeit, der Gangstufe und des Fahrzeugstyps zu gestalten, um der unterschiedlichen Beschleunigungsfähigkeit Rechnung zu tragen.

Falls das rückwärtige Sichtfeld teilweise verdeckt oder durch Kurven nicht einsehbar ist, wird eine bedingte Empfehlung (z. B. gelb blinkend) ausgegeben. Sie wird beim Ausscheren laufend aktualisiert, so daß eine kurzfristige Reaktion möglich bleibt. Die Anzeige "gelb blinkend" erscheint auch, wenn die gemessenen Daten für die Auswertelogik unplausibel sind.

Es ist empfehlenswert, in den Bewertungsindex Informationen über einen bestimmten Mindestabstand einzuarbeiten, der während des gesamten Spurwechselvorgangs nicht unterschritten werden sollte. Der Mindestabstand ergibt sich dabei aus der Geschwindigkeit des nachfolgenden Fahrzeugs unter Berücksichtigung der menschlichen Reaktionszeiten im Straßenverkehr. Der Bewertungsindex dient dann als Gefahrenindex, der unmittelbar die Gefahr indiziert, die mit dem Spurwechselvorgang verbunden ist. Es wird also in jedem Anzeigebereich oder jeder Anzeigestufe gefordert, daß der Abstand des Hintermannes im Augenblick des Ausscherens auch bei leichter Unaufmerksamkeit eine rechtzeitige Reaktion zuläßt. Dies ist insbesondere bei geringen Differenzgeschwindigkeiten erforderlich, die nur aufgrund der Schätzung der notwendigen Beschleunigung eine niedrige Gefahrbewertung ergeben würden. Als Nährungswert für den Mindestabstand wird in Anlehnung an bekannte Untersuchungen die Strecke gewählt, die das nachfolgende Fahrzeug in der Zeit zurücklegt, die sein Fahrer für Blickzuwendung, Korrektursaccade, Reaktion und muskuläre Umsetzung benötigt. Sie beträgt für 98 % der untersuchten Fahrer weniger als 1,14 s.

Bezüglich der Vorrichtung wird die Aufgabe erfindungsgemäß dadurch gelöst, daß ein Entfernungsmeßgerät im Heckbereich des Kraftfahrzeugs angeordnet ist, mit dessen zugeordnetem Meßkopf ein vorgebbarer Winkelbereich abscanbar ist, daß das Entfernungsmeßgerät mit einer Auswertevorrichtung verbunden ist, deren Logik aus den Signaturen von zumindest zwei aufeinander folgenden Scans die bei einem Spurwechsel notwendige Differenzbeschleunigung und den Abstand der beiden Kraftfahrzeuge voneinander ermittelt und die in Abhängigkeit von den ermittelten Werten den Bewertungs- bzw. Gefahrenindex bildet, und daß eine Anzeigevorrichtung vorgesehen ist, mittels der der Bewertungs- bzw. Gefahrenindex optisch und/oder akustisch angezeigt wird.

Es kommen prinzipiell alle bekannten Arten vor Entfernungsmeßgeräten infrage, wie beispielsweise ein Radargerät oder ein Infrarotgerät, doch zeichnet sich eine besonders vorteilhafte Ausführungsform der Erfindung dadurch aus, daß das Entfernungsmeßgerät ein Laserpulsgerät ist, das vorzugsweise eine Strahldivergenz im Bereich von 0,05° bis 2° aufweist. Dadurch werden die Störanfälligkeit der Messung von außen und die Beeinflussung der Umgebung durch das Meßverfahren klein gehalten.

Weitere Vorteile und Ausgestaltungen der Erfindung ergeben sich aus der Beschreibung eines Ausführungsbeispiels anhand der Figuren. Es zeigen:

Fig. 1 ein Kraftfahrzeug mit Entfernungsmeßgerät im Heckbereich,

Fig. 2 ein Kraftfahrzeug mit drei Meßköpfen,

Fig. 3 eine Verkehrsskizze bei beabsichtigtem Fahrspurwechsel und

Fig. 4 einen seitlichen Rückspiegel mit integrierter Anzeigevorrichtung für den Bewertungsindex oder Gefahrenindex.

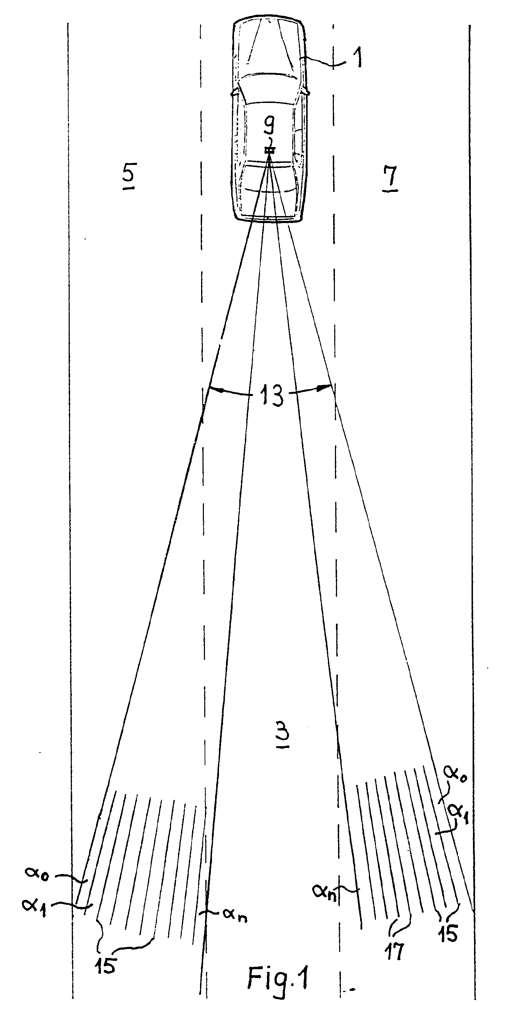

In Figur 1 ist ein Fahrzeug 1 dargestellt, das sich auf der mittleren Fahrspur 3 einer dreispurigen Autobahn befindet. Die linke und rechte Spur sind mit 5 bzw. 7 bezeichnet. Im Heckbereich des Fahrzeugs 1 ist möglichst hoch, z.B. oberhalb der Heckscheibe, ein Meßkopf 9 eines Entfernungsmeßgeräts 11, vorzugsweise eines Laserpulsgeräts, angeordnet. Das Entfernungsmeßgerät 11 ist mit einer Auswertevorrichtung (nicht gezeigt) verbunden.

Der Meßkopf 9 scant einen Winkelbereich von ±15° ab, der durch den gekrümmten Doppelpfeil 13 dargestellt wird. Der Winkelbereich ist in eine Vielzahl kleiner Winkelteilbereiche $\alpha l$ bis $\alpha n$ aufgeteilt, die jeweils einen Scanschritt 15 (wie bei der linken Fahrspur 5 gezeigt) oder aber je nach Ausführungsform, wie nachfolgend beschrieben wird, eine Überdeckungslücke 17 (wie bei der rechten Fahrspur 7 gezeigt) darstellen.

Das Laserpuls-Enfernungsmeßgerät 11 arbeitet mit einer apparativ vorgegebenen Strahldivergenz. Sie wird aus denteilweise widersprüchlichen - Forderungen:

- minimale Sendeleistung (Augensicherheit, Lebensdauer der Sendedioden),
- geforderte Reichweite,
- Reflektivität der anzumessenden Objekte,
- Absorption der Atmosphäre (Nebel),
- geometrische Aufweitung des Strahls und damit Verwischung des Zielpunktes

ermittelt und liegt im Bereich von ca. 0,05° bis 2°. Für die folgenden Überlegungen wird von 0,1° Strahldivergenz ausgegangen, was einem Strahldurchmesser von ca. 35 cm in 200 m Entfernung entspricht.

Auf der rechten bzw. linken Straßenberandung ergibt sich eine Meßfläche, deren Größe mit zunehmendem Abstand bzw. abnehmendem Scanwinkel rasch anwächst (in 200 m Abstand 13,3 m, in 100 m Abstand 3,34 m). Es ist daher relativ aufwendig, die Scanwinkel so zu wählen, daß die Meßflächen den interessierenden Entfernungsbereich dicht oder gar überlappend überdecken. Dazu sind bei einem Winkelbereich von ± 15° ca. 300 Scanschritte 15 notwendig. Bei einer angenommenen Dauer pro Scan von 200 ms bleiben pro Scanschritt 15 0,67 ms, was hohe Anforderungen an das Entfernungsmeßgerät 11 stellt. Die Anforderungen lassen sich reduzieren, wenn auf ein dichtes Abscannen verzichtet wird. Es reicht aus, die Dichte der Scanpunkte oder Scanschritte 15 so zu wählen, daß die Entfernung eines Objektes in aufeinanderfolgenden Scandurchgängen ermittelt wird. Falls das Objekt in einem Durchgang nicht erfaßt wird, muß es im darauffolgenden wieder erfaßt werden. Wenn eine noch längere Zeitspanne zwischen zwei Erfassungen desselben Objektes liegt, besteht die Gefahr, daß eine eindeutige Zuordnung der z. B. zum Zeitpunkt t = 0 und t = 3 $t_{scan}$ gemessenen Signaturen zu demselben Objekt nicht mehr möglich ist. Zudem wächst die Gefahr falsch positiver Überholempfehlungen.

Für die spätere Auswertung sind nur Objekte mit einer endlichen Differenzgeschwindigkeit zum Meßfahrzeug relevant. Die Überdeckungslücke 17 kann daher so gewählt werden, daß Fahrzeuge, die bei der Messung t = 0 nicht erfaßt werden, bei t = $t_{scan}$ in einen Meßbereich gelangt sind. Die kleinsten relevanten Objekte sind Motorräder, die eine für die Messung ausreichende Reflektivität auf einer Länge von ca. 2 m aufweisen. Für die Überdeckungslücke 17 deren Wert als Delta s bezeichnet ist, kann ein noch darüber liegender Wert angesetzt werden. Angwendet auf die Praxis führen diese Überlegungen zu den in Tabelle A dargestellten Werten N von benötigten Scanschritten 15.

Tabelle 1: Zahl N der erforderlichen Scanschritte 15 bei unterschiedlichen Überdeckunglücken 17 ( Delta s) für den Winkelbereich -15° < $\alpha$ < +15° für die Entfernungen 100 m und 200 m.

| Delta s [m] | N (100 m) | N (200 m) |
|---|---|---|
| 0 | ca. 260 | ca. 285 |
| 1,0 | 82 | 106 |
| 2,0 | 56 | 76 |
| 3,0 | 42 | 60 |

Die Weite der Scanschritte 15 liegt zwischen 1,0 und 2,4° für kleine Entfernungen und nimmt für große Entfernungen auf ca. 0,1° ab.

Die Zahl der Scanschritte 15 pro Scan kann weiter abgesenkt werden, wenn die Überdeckungslücke 17 von relativ kleinen Werten Delta s bei kurzen Entfernungen auf größere Werte Delta s für die längeren Distanzen gesteigert wird. Damit wird der Tatsache Rechnung getragen, daß bei größeren Abständen nur die höheren Differenzgeschwindigkeiten für die Überholungsempfehlung relevant sind.

Eine weitere Absenkung der Zahl N der Scanschritte 15 pro Scan ist möglich, wenn aufeinanderfolgende Scans "ineinanderkämmend" gebildet werden. Dabei werden im Scan t = 0 die Winkel $\alpha_1$, $\alpha_3$, $\alpha_5$... angesteuert, im Scan t = $t_s$ folgen die Winkel $\alpha_0$, $\alpha_2$, $\alpha_4$... usw.

Eine weitere Möglichkeit zur Absenkung der Schrittzahl N beruht auf der Ausnutzung der "Vorkenntnis", die das System aufgrund der vorausgegangenen Messungen über die Verkehrssituation hat. Es lassen sich Regeln formulieren, die angeben, wo das Auftreten einer Signatur bei einem zusätzlichen Scan plausibel ist.

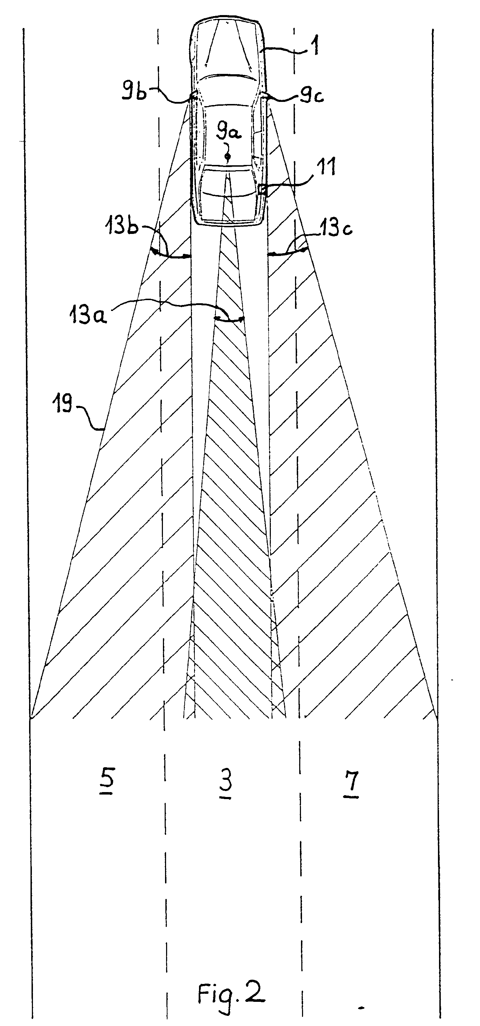

In Figur 2 ist ein Fahrzeug 1 gezeigt, das mit einem Entfernungsmeßgerät 11 mit drei Meßköpfen 9a, 9b und 9c ausgerüstet ist. Der Meßkopf 9a befindet sich in der Mitte des Fahrzeugs 1, und die Meßköpfe 9b und 9c sind in dem linken bzw. rechten Außenspiegel angeordnet. Die Scanbereiche, die von den einzelnen Meßköpfen 9a-9c gebildet werden, sind durch Doppelpfeile 13a, 13b, bzw. 13c dargestellt. Beim linken Meßkopf 9b ist der Scanbereich 13b so eingestellt, daß seine in Fahrtrichtung gesehen rechte Begrenzung im wesentlichen parallel zur mittleren Fahrbahn 3 verläuft. Seine linke Begrenzung 19 ist so gewählt, daß im entfernteren Bereich die linke Fahrspur 5 vollständig erfaßt wird. Der Scanbereich des rechten Meßkopfes 9c ist spiegelsymmetrisch hierzu eingestellt und deckt den entfernteren Bereich der rechten Fahrspur 7 ab. Der mittlere Bereich hinter dem Fahrzeug 1 wird, wie es zuvor anhand der Figur 1 beschrieben ist, von einem mittig über der Heckscheibe plazierten Meßkopf 9a überwacht, der allerdings einen deutlich kleineren Scanbereich aufweist als der nach Figur 1.

Diese Ausführungsform bietet den Vorteil, daß die für einen Scan benötigte Zeit aufgrund der jeweils kleineren Überwachungsbereiche deutlich reduziert werden kann. Wahlweise kann auch die Weite $\alpha$ der Scanschritte 15 verkleinert werden (höhere Scanschrittzahl N), um eine genauere Messung zu gewährleisten, oder es wird eine Kombination beider Möglichkeiten gewählt. Wenn der Geräteaufwand klein gehalten werden soll, ist es sinnvoll, von einem zentralen Sende- und Empfangsgerät aus über Lichtleitfasern alle Meßköpfe 9a bis 9c im Zeitmultiplexverfahren anzusteuern.

Die Ausführungsform gemäß Figur 2 ermöglicht also ein großes Sichtfeld auf die linke und rechte Fahrspur 5,7, was insbesondere bei Kolonnenfahrt nützlich ist.

Außerdem besteht bei geeigneter Wahl der Scanbereiche 13b, 13c die Möglichkeit, zusätzlich zum entfernteren Bereich auch den toten Winkel der Außenspiegel abzudecken.

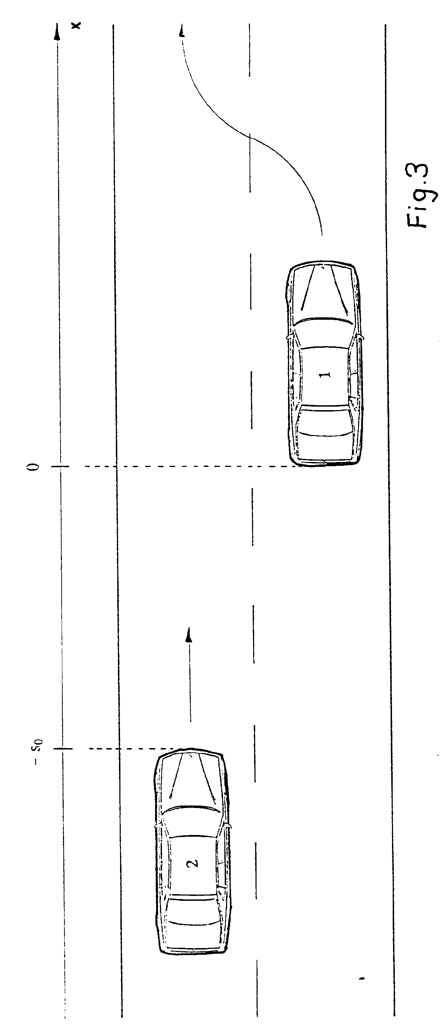

Anhand der Figur 3 soll an einem praktischen Ausführungsbeispiel gezeigt werden, welche Überlegungen bei der Auslegung der Logik zur Berechnung eines Bewertungs- oder Gefahrenindex zu berücksichtigen sind.

Die Figur 3 zeigt hierzu eine Verkehrsskizze mit zwei Fahrzeugen 1, 2, von denen Fahrzeug 1 zu einem Spurwechselvorgang ansetzt. Neben der Fahrbahn ist eine Achse gezeigt, auf der die zurückgelegte Strecke x ab dem Spurwechselvorgang aufgetragen ist. Auf Höhe der hinteren Stoßstange des Fahrzeugs 1 ist x = O gesetzt. Der Abstand zu dem hinteren Fahrzeug 2 ist mit $-S_o$ bezeichnet. Im folgenden bezieht sich der Index 1 jeweils auf das vordere Fahrzeug 1 und der Index 2 auf das hintere Fahrzeug 2. Die seit Beginn des Spurwechselvorgangs abgelaufene Zeit ist mit t bezeichnet. Der Index o kennzeichnet die zum Zeitpunkt t = O gemessenen Werte. Die Geschwindigkeit der Fahrzeuge 1, 2 ist mit v bezeichnet, wobei $v_{20}$ dann z.B. die Geschwindigkeit des Fahrzeugs 2 zu Beginn des Spurwechselvorgangs bedeutet. Die Beschleunigung der Fahrzeuge 1, 2 ist mit a bezeichnet.

Die Ermittlung des maximal notwendigen Scanwinkels für unterschiedliche Ausgangssituationen (s,a,v) beruht auf folgender Überlegung:

Die Ermittlung der Geschwindigkeit v von Fahrzeugen auf der benachbarten Spur ist nur dann erforderlich,

5

wenn die Abstände eine Anpassung der Geschwindigkeit durch Abbremsung und Beschleunigung überhaupt noch erlauben.

Ein Spurwechsel ist dann noch möglich, wenn der Abstand $s_0$, die Differenzgeschwindigkeit Delta $v = v_{10} - v_{20}$ und die Differenzbeschleunigung Delta $a = a_1 - a_2$ eine Anpassung der Geschwindigkeit so ermöglichen, daß ein Sicherheitsabstand $S_{min}$ zu keinem Zeitpunkt unterschritten wird.

Der minimale Sicherheitsabstand ist durch die Strecke definiert, die das Fahrzeug 2 noch ungebremst zurücklegt, wenn vom Fahrzeug 1 ein Bremsvorgang eingeleitet wurde. Bekannte Untersuchungen haben ergeben, daß die dabei auftretende Reaktionszeit $t_{UR}$ für 98% der Autofahrer kleiner als 0,78 s ist. Dabei wird unterstellt, daß der Fahrer von Fahrzeug 2 das Fahrzeug 1 aufgrund des vorausgegangenen Spurwechsels im fovealen Blickfeld hat, sodaß keine Blickzuwendungszeit und keine Korrektursaccaden erforderlich sind. (Bei der späteren Betrachtung zur Spurwechselempfehlung werden die Blickzuwendungszeit und Korrektursaccaden berücksichtigt, sodaß dort der eingangs genannte Wert von $t_{BU} = 1,14$ s in Ansatz gebracht wird.)

Für den einzuhaltenden Sicherheitsabstand gilt daher:

$$\text{Delta } s_{min} = v_2 \cdot t_{min} \quad (1)$$

$$\text{Delta } t_{min} = t_{UR} = 0,78s$$

Die Tabelle 2 gibt eine Übersicht, welche Sicherheitsabstände $s_{min}$ sich bei einer Auswahl vorgegebener Geschwindigkeiten ergeben.

## Tabelle 2: Minimale Sicherheitsabstände $s_{min}$

| v [km/h] | $s_{min}$ [m] |
|---|---|
| 50 | 10,8 |
| 80 | 17,3 |
| 100 | 21,7 |
| 150 | 32,5 |
| 200 | 43,3 |

Aus

$$\frac{d}{dt}[s_1(t) - s_2(t)] = 0$$

ergibt sich die Zeit

$$t_{min} = \frac{v_{10} - v_{20}}{a_1 - a_2} \quad (2)$$

Damit folgt

$$\text{Delta } s_{min} = s_0 - \frac{1}{2}\frac{(v_{10} - v_{20})^2}{a_1 - a_2} \quad (3)$$

$$v_2(t_{min}) = v_{20} - a_2\frac{v_{10} - v_{20}}{a_1 - a_2} \quad (4)$$

Damit errechnet sich der notwendige minimale Detektionsabstand $s_0$ aus (1) und (3) zu

$$s_0 = [v_{20} - a_2\frac{v_{10} - v_{20}}{a_1 - a_2}]t_{UR} + \frac{1}{2}\frac{(v_{10} - v_{20})^2}{a_1 - a_2} \quad (5)$$

Das Meßgerät ermittelt den kürzesten Abstand zum Objekt. Der für die Auswertung relevante Abstand ergibt sich aus dem Meßwert m durch Berücksichtigung der Spurbreite b zu

$$s = \sqrt{m^2 - b^2}$$

Bei dieser Überschlagsverrechnung wird unterstellt, daß sich der Meßkopf 9 und das nachfolgende Fahrzeug 2 jeweils in der Mitte ihrer Fahrspur befinden. Für die Spurbreite wird in den folgenden Beispielen

$$b = 3,5 \text{ m}$$

angenommen. Realistische Abweichungen in der Straßenbreite ergeben selbst im Bereich $s \approx 15$ m einen systematischen Fehler in der Entfernungsbestimmung im Bereich von nur ca.10 cm.

EP 0 443 185 B1

Für den Stadtverkehr ergeben sich bei folgender unterstellter Verkehrssituation:

$v_{10}$ = 40 km/h  $v_{20}$ = 50 km/h

$a_1$ = 0,8 m/s$_2$  $a_2$ = - 2,0 m/s$^2$

für den Mindestabstand ein Wert von $S_0$ = 10,7 m und für die Geschwindigkeit des Fahrzeugs 2 nach Ablauf der Zeit $t_{min}$, zu der sich der Mindestabstand einstellt, ein Wert von

$v_2 (t_{min})$ = 42,9 km/h.

Der notwendige Scanwinkel errechnet sich zu $\alpha$ = 14,2°.

Eine analoge Betrachtung ergibt bei einer Autobahnsituation mit:

$v_{10}$ = 100 km/h  $v_{20}$ = 120 km/h

$a_1$ = 0 m/s$^2$  $a_2$ = - 2 m/s$^2$

entsprechende Werte von $s_0$ = 29,4 m für den Mindestabstand und $\alpha$ = 6,8° für den Scanwinkel. Mit einem Scanwinkel von 15° (½ x Winkel 13) sind also alle Fälle abdeckbar.

Bei einer Anpassung des Scanwinkels kann die für einen Scan benötigte Zeit bei kleineren Überwachungsbereichen reduziert werden. Wahlweise kann auch die Weite $\alpha$ der Scanschritte 15 verkleinert werden (höhere Scanschrittzahl N), um eine genauere Messung zu gewährleisten, oder es wird eine Kombination beider Möglichkeiten gewählt. So z.B. kann anhand der zuvor beschriebenen Rechenvorschriften ein Kennfeld in Abhängigkeit von den Parametern v,a,s berechnet werden, welches für alle gängigen Verkehrssituationen den Scanwinkel $\alpha$ und die Schrittzahl N im Entfernungsmeßgerät 11 einstellt.

Der untere und obere Grenzwert für den erforderlichen Detektionsabstand ergibt sich aus folgender Betrachtung:

Bei Extremwerten im Stadtverkehr mit

$v_{10}$ = 50 km/h  $v_{20}$ = 80 km/h

$a_1$ = 0 m/s$^2$  $a_2$ = -1 m/s$^2$

ergibt sich ein Detektionsabstand $s_0$ = 45,6m,

beim Losfahren aus einer Parklücke oder einer Einfahrt mit

$v_{10}$ = 0 km/h  $v_{20}$ = 80 km/h

$a_1$ = 1,5 m/s$^2$  $a_2$ = -1 m/s$^2$

ergibt sich ein Detektionsabstand $s_0$ = 109,2 m und bei einer extremen Situation auf der Autobahn mit

$v_{10}$ = 80 km/h  $v_{20}$ = 250 km/h

$a_1$ = 0,8 m/s$^2$  $a_2$ = -4,0 m/s$^2$

ergibt sich ein Detektionsabstand $s_0$ = 256 m.

Das Entfernungsmeßgerät 11 ist also so ausgelegt, daß die Messung der Entfernungen zum nachfolgenden Verkehr in einem Bereich von 14 m < m < 260 m möglich ist.

Dabei wird vorteilhafterweise berücksichtigt, daß die Leistung des Meßkopfes 9 so zu bemessen ist, daß bei Nebel eine Reichweite von etwa der 1,5- bis 2-fachen Sichtweite des menschlichen Auges erreicht wird. Außerdem soll die Erkennbarkeit des nachfolgenden Verkehrs bei regennasser Fahrbahn durch die eigene Gischtschleppe und durch die eines nachfolgenden Fahrzeugs hindurch gewährleistet sein. Auch aus diesem Grund ist der Meßkopf 9 möglichst weit oben am Fahrzeug anzuordnen.

Die Entscheidung, ob ein Spurwechsel gefahrlos möglich ist, hängt von der sicheren Feststellung ab, in welchem Ausmaß ein nachfolgendes Fahrzeug abbremsen muß, um den minimal zulässigen Sicherheitsabstand zu keinem Zeitpunkt zu unterschreiten. Eine Fehlmessung kann ein unerwünscht starkes Abbremsen des nachfolgenden Fahrzeugs 2 erfordern und damit eine gefährliche Verkehrssituation herbeiführen.

Der zulässige Fehler ergibt sich aus dem Meßprozeß:

Schritt 1:  t = 0: Fahrzeug 2 befindet sich bei s (0),

Schritt 2:  Beim folgenden Scan ist t = $t_s$: Fahrzeug 2 wird erneut erfaßt; Position s ($t_s$)

Schritt 3:  Das Gerät ermittelt aus der eigenen Geschwindigkeit $v_{10}$ und s (0), s ($t_s$), $t_s$ die Geschwindigkeit des Fahrzeugs 2:

$$(6) \qquad v_{20} = v_{10} - \frac{1}{t_s} [\, s\,(t_s) - s(0)]$$

und

Schritt 4:  Aus $v_{10}$, $v_{20}$ und s($t_s$) wird die bei einem Spurwechsel maximal notwendige Verzögerung $a_2$ des Fahrzeugs 2 ermittelt, d. h. es wird $a_1$ = 0 unterstellt.

Die zur Einhaltung des minimalen Sicherheitsabstandes notwendige Verzögerung ergibt sich aus (5) zu

$$a_2 = \frac{[s(t_s) - v_{20} \cdot t_{UR}] \cdot a_1 - ½\,(v_{10} - v_{20})^2}{s(t_s) - v_{10} \cdot t_{UR}} \quad (7)$$

Es ist davon auszugehen, daß die Fehler in der Bestimmung von $v_{10}$ und $t_s$ von untergeordneter Bedeutung sind. Dann ergibt sich der maximal mögliche Fehler im Schätzwert von $a_2$ zu: (8)

7

$$\text{Delta } \mid a_2 \mid \; = \; \mid \frac{2 (v_{10} - v_{20})}{t_s \, [s(t_s) - v_{10} \cdot t_{UR}]} - \frac{(v_{10} - v_{20})^2}{2[s(t_s) - v_{10} \cdot t_{UR}]^2} \mid \text{Delta } s$$

Aus (8) wird deutlich, daß der Fehler in der Bestimmung von $a_2$ dann sehr groß wird, wenn $s(t_s)$ sich vom notwendigen Minimalabstand $s_{min} \approx v_{10} \cdot t_{UR}$ nur wenig unterscheidet. Um den kritischen Fall geringer Differenzgeschwindigkeiten und kurzer Abstände zu umgehen, gilt die Auswertevorrichtung nur dann eine Stufe 5 (rot) abweichende Überholempfehlung ab, wenn

$$s (t_s) \geqq v_{20} \cdot t_{BU}$$
$$t_{BU} = 1{,}46 \cdot t_{UR} = 1{,}14 \text{ s}$$

gilt. Für eine Überholempfehlung sind vorteilhafterweise also die in Tabelle 3 aufgeführten Werte maßgeblich.

Tabelle 3: Mindestabstand für eine Überholempfehlung

| v [km/h] | s = $v_2$ · $t_{BU}$ [m] $t_{BU}$ = 1,14 s |
|---|---|
| 30 | 9,5 |
| 50 | 15,8 |
| 80 | 25,3 |
| 100 | 31,7 |
| 150 | 47,5 |
| 200 | 63,3 |
| 250 | 79,2 |

Tabelle 4 zeigt, welcher Schätzfehler sich im ungünstigen Fall bei einem kurzen relevanten Abstand ergeben kann. Dabei wurden folgende Parameter für den Meßprozeß unterstellt:

$$\text{Delta } s \; = \; \pm \, 0{,}15 \text{ m}$$
$$t_s \; = \; 200 \text{ ms}$$

Man erkennt, daß unter diesen relativ ungünstigen Randbedingungen der Fehler in de Indexbildung zur Gefahrenklassifikation in den meisten Fällen nur eine Stufe beträgt.

Tabelle 4:

| $v_{10}$ km/h | $v_{20}$ km/h | $s = v_{20} \cdot t_{BU}$ m | $a_2$ m/s² | $a_2$ m/s² | Anzeige-Bereich | Korrekte Anzeige |
|---|---|---|---|---|---|---|
| 50 | 55 | 17,42 | −0,15 | ±0,32 | 1−2 | 2 |
|  | 60 | 19,00 | −0,47 | ±0,52 | 1−2 | 2 |
|  | 70 | 22,17 | −1,36 | ±0,75 | 2−4 | 3 |
|  | 80 | 25,33 | −2,40 | ±0,89 | 3−4 | 4 |
|  | 90 | 28,50 | −3,49 | ±0,97 | 4−5 | 4 |
| 80 | 85 | 26,92 | −0,10 | ±0,22 | 1−2 | 2 |
|  | 90 | 28,50 | −0,35 | ±0,38 | 1−2 | 2 |
|  | 100 | 31,67 | −1,08 | ±0,59 | 2−3 | 3 |
|  | 120 | 38,00 | −2,99 | ±0,83 | 4 | 4 |
|  | 150 | 47,50 | −6,27 | ±1,00 | 5 | 5 |
| 120 | 130 | 41,17 | −0,25 | ±0,28 | 1−2 | 2 |
|  | 150 | 47,50 | −1,61 | ±0,59 | 3−4 | 3 |
|  | 170 | 53,83 | −3,47 | ±0,77 | 4−5 | 4 |
|  | 200 | 63,33 | −6,61 | ±0,92 | 5 | 5 |
| 180 | 190 | 60,17 | −0,18 | ±0,20 | 1−2 | 2 |
|  | 220 | 69,67 | −2,01 | ±0,55 | 3−4 | 4 |
|  | 250 | 79,17 | −4,71 | ±0,74 | 4−5 | 5 |

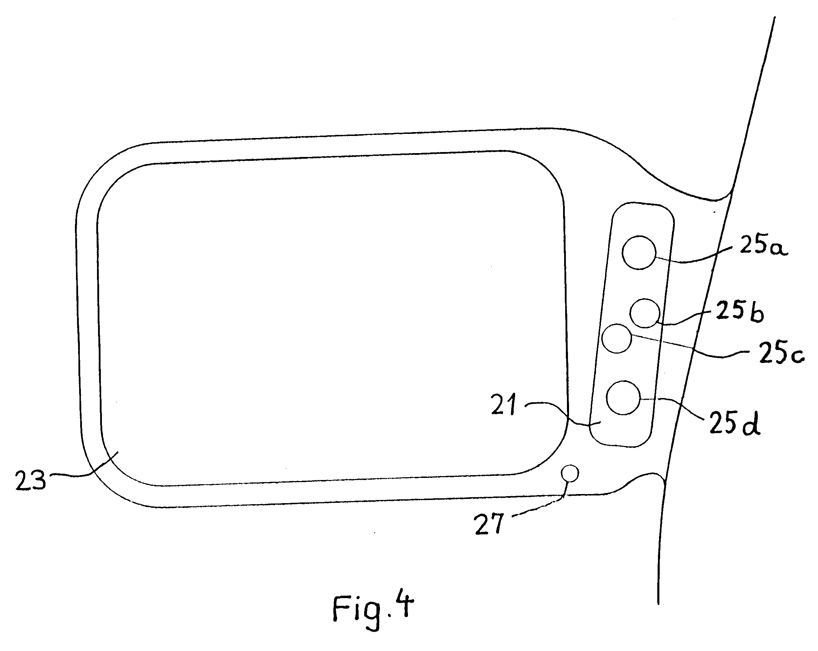

Der nach obenstehenden Überlegungen ermittelte Bewertungsindex (rechte Spalte der Tabelle 4) für verschiedene Verkehrssituationen wird mittels eines Anzeige-Displays 21, wie es beispielsweise anhand der Figur 4 in einen Außenspiegel 23 integriert dargestellt ist, angezeigt.

Das Anzeige-Display 21 weist vier Leuchtdioden 25a - 25d auf, deren Helligkeit über eine Fotodiode 27 außenlichtabhängig gesteuert wird. Die Anzeige erfolgt auf Wunsch ständig oder nach Aufforderung durch den Fahrer.

Die obere Leuchtdiode 25a ist rot, die beiden mittleren Leuchtdioden 25b,25c sind gelb und die untere Leuchtdiode 25d ist grün, wobei die beiden gelben Leuchtdioden 25b,25c versetzt zueinander angeordnet sind. Damit lassen sich die eingangs erwähnten fünf unterschiedlichen Zeichenkombinationen, die entsprechenden Bewertungs- bzw. Gefahrenindices zugeordnet sind, gut erkennbar darstellen. Es ist nützlich, den linken und den rechten Außenspiegel 23 mit je einem Anzeige-Display 21 zu versehen. Damit ist sichergestellt, daß stets ein eindeutiger Bezug zum beabsichtigten Fahrmanöver besteht und mit derselben Kopfbewegung über einen geeignet gestalteten Spiegel auch der vom Meßkopf 9 nicht überwachte tote Winkel abgeprüft wird. Das Anzeige-Display 21 ist in der Wurzel oder der fahrzeugzugewandten Ecke des Außenspiegles 23 angeordnet.

Wie bereits erwähnt, können mehrere Meßköpfe 9 über Lichtleitfasern im Zeitmultiplexverfahren angesteuert werden. Das erschließt die Möglichkeit einer Abstandswarnung vorne, die folgende Funktionen erfüllen kann:

- Vermeidung von Auffahrunfällen bei Einfädelmanövern,
- Pre Crash-Sensor vorne,

- Abstand zum Vordermann bei schlechter Sicht,
- Überholhilfe.

Der Meßkopf 9 für die Spurwechselhilfe überwacht zwangsläufig auch den hinteren Nahbereich. Durch eine geeignete Meß- und Auswertestrategie kann deswegen außerdem ein Pre-Crash-Sensor hinten mit geringem Zusatzaufwand realisiert werden.

**Patentansprüche**

1. Verfahren zum Messen und Auswerten des Abstandes eines Kraftfahrzeugs zu einem nachfolgenden Kraftfahrzeug, bei welchem die Messung und Auswertung in dem vorderen Kraftfahrzeug durchgeführt werden, mittels eines Entfernungsmeßgeräts im Heckbereich des Kraftfahrzeugs, mit dessen zugeordnetem Meßkopf ein vorgebbarer Winkelbereich abscanbar ist, bei dem das Entfernungsmeßgerät mit einer Auswertevorrichtung verbunden ist, deren Logik den Abstand der beiden Kraftfahrzeuge ermittelt, <u>dadurch gekennzeichnet, daß</u> mittels der Auswertevorrichtung aus mehreren aufeinanderfolgenden Abstandsmessungen die zur Aufrechterhaltung eines sicheren Mindestabstandes notwendige Differenzbeschleunigung der beiden Kraftfahrzeuge ermittelt wird und unter Berücksichtigung der Differenzbeschleunigung beider Kraftfahrzeuge ein Bewertungsindex gebildet wird, der dem Kraftfahrer optisch und/oder akustisch angezeigt wird.

2. Verfahren nach Anspruch 1, dadurch gekennzeichnet, daß aus dem Bewertungsindex unter Berücksichtigung der menschlichen Reaktionszeiten im Straßenverkehr ein Gefahrenindex gebildet wird.

3. Verfahren nach Anspruch 1 oder 2, dadurch gekennzeichnet, daß ein Warnsignal angezeigt wird, wenn ein inkonsistenter Bewertungs- bzw. Gefahrenindex vorliegt, der keine eindeutige Aussage über die Situation des nachfolgenden Verkehrs zuläßt.

4. Verfahren nach einem der Ansprüche 1 bis 3, dadurch gekennzeichnet, daß der Wertebereich, in welchem der Bewertungs- bzw. Gefahrenindex liegen kann, in eine vorgegebene Anzahl von Stufen oder Teilbereichen, z.B. 3 bis 6 Teilbereiche, gegliedert wird und angezeigt wird, in welchem Teilbereich der Bewertungs- bzw. Gefahrenindex liegt.

5. Verfahren nach Anspruch 4, dadurch gekennzeichnet; daß die Teilbereiche farblich unterschiedlichen Anzeigeelementen zugeordnet sind.

6. Vorrichtung zur Durchführung des Verfahrens nach einem der Ansprüche 1 bis 5 zum Messen und Auswerten des Abstandes eines Kraftfahrzeugs zu einem nachfolgendem Kraftfahrzeug, bei welchem die Messung und Auswertung in dem vorderen Kraftfahrzeug durchgeführt werden, mit einem Entfernungsmeßgerät im Heckbereich des Kraftfahrzeugs, mit dessen zugeordnetem Meßkopf ein vorgebbarer Winkelbereich abscanbar ist, bei der das Entfernungsmeßgerät mit einer Auswertevorrichtung verbunden ist, deren Logik den Abstand der beiden Kraftfahrzeuge ermittelt, <u>dadurch gekennzeichnet, daß</u> die Logik der Auswertevorrichtung derart aufgebaut ist, daß aus den Signaturen von zumindest zwei aufeinanderfolgenden Scans die Differenzbeschleunigung und der Abstand der beiden Kraftfahrzeuge ermittelt wird und in Abhängigkeit von den ermittelten Werten der Bewertungsindex gebildet wird, und daß eine Anzeigevorrichtung vorgesehen ist, mittels der der Bewertungsindex optisch oder akustisch angezeigt wird.

7. Vorrichtung nach Anspruch 6, dadurch gekennzeichnet, daß das Entfernungsmeßgerät (11) ein Laserpulsgerät ist, das vorzugsweise eine Strahldivergenz im Bereich von O,05° bis 2° aufweist.

8. Vorrichtung nach Anspruch 6 oder 7, dadurch gekennzeichnet, daß das Entfernungsmeßgerät (11) in der Fahrzeugmitte angeordnet ist und der Winkelbereich ±15° beträgt.

9. Vorrichtung nach einem der Ansprüche 6 bis 8, dadurch gekennzeichnet, daß die Weite $\alpha$ der Scanschritte (15) von kleinen zu größeren Entfernungen hin abnimmt, z.B. von ca. 2,4° auf ca. 1,O°.

10. Vorrichtung nach einem der Ansprüche 6 bis 9, dadurch gekennzeichnet, daß aufeinanderfolgende Scanschritte (15) eine Überdeckungslücke (17) aufweisen, die vorzugsweise von kleinen Werten bei kurzen Entfernungen auf größere Werte bei weiteren Entfernungen zunimmt.

11. Vorrichtung nach einem der Ansprüche 6 bis 10, dadurch gekennzeichnet, daß die Scanschritte (15) aufeinanderfolgender Scans ineinanderkämmend gebildet sind, so daß zwei Scans zusammengenommen eine dichtere Überwachung des nachfolgenden Verkehrs ergeben.

12. Vorrichtung nach Anspruch 6, dadurch gekennzeichnet, daß der Winkelbereich (13) der Scans in Abhängigkeit von der Meßwerterfassung des nachfolgenden Verkehrs gebildet ist.

13. Vorrichtung nach einem der Ansprüche 6 bis 12, dadurch gekennzeichnet, daß der Meßkopf (9) möglichst weit oben am Fahrzeug (1), beispielsweise über der Heckscheibe, angeordnet ist.

14. Vorrichtung nach einem der Ansprüche 6 bis 13, dadurch gekennzeichet, daß in der Auswertevorrichtung ein Kennfeld abgespeichert ist, mittels dem in Abhängigkeit von der Verkehrssituation, insbesondere anhand der Parameter Geschwindigkeit v, Beschleunigung a und Abstand s der beteiligten Fahrzeuge (1, 2), der Scanbereich (13) und/oder die Anzahl N der Scanschritte (15) und/oder die Scanweite $\alpha$ einstellbar ist.

15. Vorrichtung nach einem der Ansprüche 6 bis 14, dadurch gekennzeichnet, daß die Anzeigevorrichtung (21) ein Display (21) ist, das vorzugsweise in die Außenspiegel (23) des Kraftfahrzeugs (1) integriert ist.

16. Vorrichtung nach einem der Ansprüche 6 bis 15, dadurch gekennzeichnet, daß zusätzliche Meßköpfe (9b, 9c) in den Außenspiegeln angeordnet sind.

## Claims

1. A method for the measurement and evaluation of the distance between a motor vehicle and a following motor vehicle, wherein the measurement and evaluation are carried out in the vehicle in front by means of a distance-measuring device in the rear region of the motor vehicle which can scan a pre-determined angular range through its assigned measuring head, the said distance-measuring device being connected to an evaluation device the logic circuit of which determines the distance between the two vehicles, <u>characterised in that</u> the differential acceleration of the two vehicles necessary to ensure adherence to a safe minimum distance is determined by means of the evaluation device from a plurality of sequential distance measurements and that this differential acceleration of both vehicles is taken into consideration in deriving a weighting index which is displayed to the driver optically and/or audibly.

2. A method according to claim 1, characterised in that a danger index is derived from the weighting index taking into consideration the human reaction times in street traffic.

3. A method according to either claim 1 or 2, characterised in that a warning signal is displayed if there is an inconsistent weighting/danger index which does not permit an unequivocal statement about the circumstances of following traffic.

4. A method according to any one of claims 1 to 3, characterised in that the range of values in which the weighting/danger index can lie is divided into a pre-defined number of sub-ranges, eg., 3 to 6 sub-ranges, and that the sub-range in which the weighting/danger index lies is displayed.

5. A method according to claim 4, characterised in that display elements of differing colours are assigned to the sub-ranges.

6. A device for carrying out the method according to claims 1 to 5 for the measurement and evaluation of the distance between a motor vehicle and a following motor vehicle, wherein the measurement and evaluation are carried out in the vehicle in front, with a distance-measuring device in the rear region of the motor vehicle which can scan a pre-determined angular range through its assigned measuring head, the said distance-measuring device being connected to an evaluation device the logic circuit of which determines the distance between the two vehicles, <u>characterised in that</u> the logic circuit of the evaluation device is constructed such that the differential acceleration of, and distance between, the two vehicles is determined from the signatures of at least two sequential scans and that the weighting index is derived as a function of the elucidated values, and that a display device is provided by means of which the weighting index is displayed optically or audibly.

7. A device according to claim 6, characterised in that the distance-measuring device (11) is a laser pulse device which preferably has a beam divergence in the range 0.05° to 2°.

8. A device according to either claim 6 or 7, characterised in that the distance-measuring device (11) is arranged in the middle of the vehicle and the angular range is ±15°.

9. A device according to any one of claims 6 to 8, characterised in that the width $\alpha$ of the scanning steps (15) decreases in inverse proportion to distance, for example from approximately 2.4° to approximately 1.0°.

10. A device according to any one of claims 6 to 9, characterised in that the sequential scanning steps (15) have an overlap gap (17) which preferably increases from small values at low distances to large values at greater distances.

11. A device according to any one of claims 6 to 10, characterised in that the scanning steps (15) of successive scans are interlaced so that two scans taken together yield a denser monitoring of the following traffic.

12. A device according to claim 6, characterised in that the angular range (13) of the scan is determined as a function of the measured values recorded for the following traffic.

13. A device according to any one of claims 6 to 12, characterised in that the measuring head (9) is positioned high up on the vehicle (1), for instance above the rear window.

14. A device according to any one of claims 6 to 13, characterised in that a family of characteristics is stored in the evaluation unit by means of which the scanning range (13) and/or the number N of scanning steps (15) and/or the scanning width $\alpha$ can be set depending on the traffic situation, and especially the parameters speed v, acceleration a and distance s between the two vehicles (1, 2).

15. A device according to any one of claims 6 to 14, characterised in that the display device (21) is a display (21) which is preferably integrated into the exterior mirror (23) of the motor vehicle (1).

16. A device according to any one of claims 6 to 15, characterised in that additional measuring heads (9b, 9c) are arranged in the exterior mirrors.


## Revendications

1. Procédé pour mesurer et exploiter la distance d'un véhicule à moteur par rapport à un véhicule à moteur le suivant, dans le cas duquel la mesure et l'exploitation, sont effectuées dans le véhicule à moteur de devant, au moyen d'un appareil de mesure d'éloignement dans la zone arrière du véhicule à moteur, une zone angulaire prédéfinissable pouvant être explorée avec la tête de mesure correspondante, l'appareil de mesure d'éloignement étant relié à un dispositif d'exploitation dont le circuit logique détecte la distance entre les deux véhicules, procédé caractérisé en ce qu'au moyen du dispositif d'exploitation on détermine, à partir de plusieurs mesures de distance consécutive, la différence des accélérations des deux véhicules qui est nécessaire au maintien d'une distance minimale de sécurité entre eux, et l'on forme un index d'évaluation qui est indiqué de façon optique et/ou acoustique au conducteur du véhicule en prenant en considération la différence des accélérations des deux véhicules à moteur.

2. Procédé selon la revendication 1, caractérisé en ce qu'on forme un index de danger à partir de l'index d'évaluation en prenant en considération les temps nécessaires à une personne pour réagir dans un trafic routier.

3. Procédé selon la revendication 1 ou 2, caractérisé en ce que l'on indique un signal avertisseur quand il y a un index d'évaluation ou de danger inconsistant, qui ne donne pas d'information claire sur la situation des véhicules qui suivent.

4. Procédé selon l'une des revendications 1 à 3, caractérisé en ce que la zone des valeurs dans lesquelles l'index d'évaluation ou de danger peut se trouver, est structurée en un nombre prédéfini d'étapes ou de zones partielles, par exemple trois à six zones partielles, et l'on indique dans quelle zone partielle se trouve l'index d'évaluation de danger.

5. Procédé selon la revendication 4, caractérisé en ce que des éléments indicateurs de différentes couleurs correspondent à ces zones partielles.

6. Dispositif pour la mise en oeuvre du procédé selon l'une des revendications 1 à 5 pour mesurer et exploiter la distance d'un véhicule à moteur par rapport à un véhicule à moteur le suivant, dans le cas duquel la mesure et l'exploitation sont effectuées dans le véhicule à moteur de devant, au moyen d'un appareil de mesure d'éloignement placé dans la zone arrière du véhicule à moteur, une zone angulaire prédéfinissable pouvant être explorée avec la tête de mesure correspondante, l'appareil de mesure d'éloignement étant relié à un dispositif d'exploitation dont le circuit logique détecte la distance entre les deux véhicules, dispositif caractérisé en ce que le circuit logique du dispositif d'exploitation est construit de telle façon qu'à partir des signatures d'au moins deux explorations consécutives, on détermine la différence des accélérations et la distance des deux véhicules à moteur, et l'on forme l'index d'évaluation en fonction des valeurs déterminées, et en ce qu'il est prévu un dispositif indicateur au moyen duquel l'index d'évaluation est indiqué de façon optique ou acoustique.

7. Dispositif selon la revendication 6, caractérisé en ce que l'appareil de mesure d'éloignement (11) est un appareil laser à impulsions qui présente de préférence une divergence de faisceau dans la zone allant de 0,05 à 2°.

8. Dispositif selon la revendication 6 ou 7, caractérisé en ce que l'appareil de mesure d'éloignement (11) est disposé au milieu du véhicule, et la zone angulaire atteint ±15°.

9. Dispositif selon l'une des revendications 6 à 8, caractérisé en ce que l'étendue ($\alpha$) de la séquence d'exploration (15) décroît en passant de petits éloignements à des éloignements plus grands, par exemple d'environ 2,4° à environ 1,0°.

10. Dispositif selon l'une des revendications 6 à 9, caractérisé en ce que des séquences d'exploration consécutives (15) présentent une couche de recouvrement (17) qui croit de préférence en partant de petites valeurs dans le cas de courts éloignements, pour aller vers des valeurs plus grandes dans le cas d'éloignements plus importants.

11. Dispositif selon l'une des revendications 6 à 10, caractérisé en ce que les séquences (15) d'explorations consécutives sont formées en les engrenant les unes dans les autres, de telle sorte qu'en prenant ensemble deux explorations, on ait une surveillance plus dense des véhicules qui suivent.

12. Dispositif selon la revendication 6, caractérisé en ce que la zone angulaire (13) de l'exploration est formée en fonction de la détermination de la valeur de mesure des véhicules qui suivent.

13. Dispositif selon l'une des revendications 6 à 12, caractérisé en ce que la tête de mesure (9) est disposée autant que possible sur le véhicule (1), par exemple au-dessus de la lunette arrière.

14. Dispositif selon l'une des revendications 6 à 13, caractérisé en ce que, dans le dispositif d'exploitation, on met en mémoire un champ caractéristique au moyen duquel on peut régler la zone d'exploration (13) et/ou le nombre N des séquences d'exploration (15) et/ou la largeur d'exploration ($\alpha$) en fonction de la situation de trafic, en particulier à partir des paramètres suivants : la vitesse v, l'accélération a et la distance s des véhicules concernés (1, 2).

15. Dispositif selon l'une des revendications 6 à 14, caractérisé en ce que le dispositif indicateur (21) est un afficheur (21) qui est intégré de préférence dans le rétroviseur extérieur (23) du véhicule à moteur (1).

16. Dispositif selon l'une des revendications 6 à 15, caractérisé en ce que des têtes de mesure additionnelles (9b, 9c) sont disposées dans les rétroviseurs extérieurs.

Fig.1

Fig. 2

Fig.3

Fig. 4